(19) Europäisches Patentamt / European Patent Office / Office européen des brevets

(11) **EP 2 765 584 A1**

(12) **EUROPEAN PATENT APPLICATION**
published in accordance with Art. 153(4) EPC

(43) Date of publication:
**13.08.2014 Bulletin 2014/33**

(51) Int Cl.:
*H01F 38/14* (2006.01)　　　*H02J 7/00* (2006.01)

(21) Application number: **11873664.4**

(22) Date of filing: **04.10.2011**

(86) International application number:
**PCT/JP2011/072839**

(87) International publication number:
**WO 2013/051105 (11.04.2013 Gazette 2013/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(71) Applicant: **Toyota Jidosha Kabushiki Kaisha Toyota-shi, Aichi 471-8571 (JP)**

(72) Inventors:
• **ICHIKAWA, Shinji**
  **Toyota-shi, Aichi 471-8571 (JP)**

• **HORIUCHI, Satoru**
  **Toyota-shi, Aichi 471-8571 (JP)**
• **MIENO, Atsushi**
  **Toyota-shi, Aichi 471-8571 (JP)**
• **ARASU, Michiaki**
  **Toyota-shi, Aichi 471-0823 (JP)**

(74) Representative: **TBK**
  **Bavariaring 4-6**
  **80336 München (DE)**

(54) **POWER RECEPTION DEVICE, POWER TRANSMISSION DEVICE, AND POWER TRANSMISSION SYSTEM**

(57)　A power reception device includes a power reception unit (27) configured to receive power in a non-contact manner from a power transmission unit (28) spaced with a distance therefrom, and a first holding unit (61) configured to hold the power reception unit (27). The power reception unit (27) includes a power reception coil (11), and the power reception coil (11) is formed by winding a first coil wire (64) which has a width greater than a thickness thereof. The first holding unit (61) includes a plurality of first coil holding members (62) each formed with a first groove (77) which extends in an extending direction of the power reception coil (11) and receives the power reception coil (11). At least a part of the first groove (77) is formed in such a way that a depth of the first groove (77) extending in a width direction of the first coil wire (64) is greater than a width of the first groove (77) extending in a thickness direction of the first coil wire (64).

FIG.9

EP 2 765 584 A1

**Description**

TECHNICAL FIELD

The present invention relates to a power reception device, a power transmission device and a power transfer system.

BACKGROUND ART

In recent years, due to environmental considerations, hybrid vehicles, electric vehicles and the like in which drive wheels are driven by using power from a battery or the like are gaining attention.

Particularly in recent years, in the abovementioned electrically powered vehicle mounted with a battery, wireless charging which is capable of charging the battery in a non-contact manner without using a plug or the like is gaining attention. Recently, in the non-contact charging, various charging methods have been proposed, and particularly a technique which utilizes resonance to transfer power in a non-contact manner is drawing spotlight.

For example, the vehicle disclosed in Japanese Patent Laying-Open No. 2010-87353 is provided with a non-contact power transmission device, and the non-contact power transmission device includes a resonant coil magnetically resonating with a resonant coil disposed in the facility side, and a bobbin supporting the resonant coil.

The bobbin is made of a resin material, and is formed into a shape of a bottomed cylinder. The resonant coil is disposed on the inner circumferential surface of the bobbin.

CITATION LIST

PATENT DOCUMENT

PTD 1: Japanese Patent Laying-Open No. 2010-87353

SUMMARY OF INVENTION

TECHNICAL PROBLEM

In the non-contact power transmission device disclosed in Japanese Patent Laying-Open No. 2010-87353, the entire circumference of the resonant coil is in contact with the bobbin.

Thus, as a current flows through the resonant coil in transferring power, the bobbin generates heat at a contact portion between the resonant coil and the bobbin, which leads to dielectric loss. Thereby, the power transfer efficiency in transferring power from the facility side to the vehicle is significantly reduced.

Furthermore, the resonant coil has a cross section of a circular shape, a groove formed in the inner circumferential surface of the bobbin is also formed in a shape in accordance with the shape of the resonant coil, and thus, the cross section of the groove is formed into a semicircular shape.

Thus, in the transfer of power, when a large amount of current having a high voltage flows through the resonant coil, the resonant coil will be subjected to a high temperature. When the resonant coil is in a high temperature, the bobbin contacting the resonant coil will be subjected to a high temperature. When the bobbin is in a high temperature, the bobbin will expand, which makes the groove housing the resonant coil become smaller, and thereby, it is possible that the resonant coil embedded in the groove will disengage from the bobbin.

The present invention has been accomplished in view of the aforementioned problems, and it is therefore an object of the present invention to provide a power reception device, a power transmission device and a power transfer system to reduce dielectric loss while preventing a coil from disengaging.

SOLUTION TO PROBLEM

A power reception device according to the present invention includes a power reception unit configured to receive power in a non-contact manner from a power transmission unit spaced with a distance therefrom and a first holding unit configured to hold the power reception unit. The power reception unit includes a power reception coil. The power reception coil is formed by winding a first coil wire which has a width greater than a thickness thereof. The first holding unit includes a plurality of first coil holding members each formed with a first groove which extends in an extending direction of the power reception coil and receives the power reception coil. At least a part of the first groove is formed in such a way that a depth of the first groove extending in a width direction of the first coil wire is greater than a width of the first groove extending in a thickness direction of the first coil wire.

Preferably, the width of the first coil wire is greater than the depth of the first groove.

Preferably, the first coil holding member includes a first support portion disposed adjacent to the first groove in the width direction of the first groove for supporting the power reception coil, and a second support portion disposed opposite to the first support portion relative to the first groove for supporting the power reception coil. At least one of the first support portion and the second support portion is formed in such a way that a length thereof in the extending direction of the power reception coil increases as heading toward a bottom of the first groove.

Preferably, the first coil holding member is formed into a pillar shape, and the first groove is formed in multiple numbers spaced with a distance in a height direction of the first coil holding member.

Preferably, the first coil holding member is disposed inside the power reception coil and spaced with a distance along the power reception coil.

Preferably, the power reception device further includes a capacitor connected to both ends of the power reception coil. Both ends of the power reception coil are drawn to the inner side of the power reception coil.

Preferably, the power reception device further includes a first housing case for housing therein the power reception unit and the first holding unit. The first housing case includes a top plate, a bottom surface facing the top plate, and a peripheral wall connecting the top plate and the bottom surface. The first coil holding member is connected to the top plate and the bottom surface.

Preferably, the difference between the natural frequency of the power transmission unit and the natural frequency of the power reception unit is not more than 10% of the natural frequency of the power reception unit.

Preferably, the coupling coefficient between the power reception unit and the power transmission unit is 0.1 or less.

Preferably, the power reception unit receives power from the power transmission unit via at least one of a magnetic field which is formed between the power reception unit and the power transmission unit and oscillates at a specific frequency and an electric field which is formed between the power reception unit and the power transmission unit and oscillates at a specific frequency.

A power transmission device according to the present invention includes a power transmission unit configured to transmit power in a non-contact manner to a power reception unit spaced with a distance therefrom, and a second holding unit configured to hold the power transmission unit. The power transmission unit includes a power transmission coil. The power transmission coil is formed by winding a second coil wire which has a width greater than a thickness thereof. The second holding unit includes a plurality of second coil holding members each formed with a second groove which extends in an extending direction of the power transmission coil and receives the power transmission coil. At least a part of the second groove is formed in such a way that a depth of the second groove extending in a width direction of the second coil wire is greater than a width of the second groove extending in a thickness direction of the second coil wire.

Preferably, the width of the second coil wire is greater than the depth of the second groove.

Preferably, the second coil holding member includes a third support portion disposed adjacent to the second groove in the width direction of the second groove for supporting the power transmission coil, and a fourth support portion disposed opposite to the third support portion relative to the second groove for supporting the power transmission coil.

At least one of the third support portion and the fourth support portion is formed in such a way that a length thereof in the extending direction of the power transmission coil increases as heading toward a bottom of the second groove.

Preferably, the second coil holding member is formed into a pillar shape, and the second groove is formed in multiple numbers spaced with a distance in a height direction of the second coil holding member.

Preferably, the second coil holding member is disposed inside the power transmission coil.

Preferably, the power transmission device further includes a capacitor connected to both ends of the power transmission coil. Both ends of the power transmission coil are drawn to the inner side of the power transmission coil.

Preferably, the power transmission device further includes a second housing case for housing therein the power transmission unit and the second holding unit. The second housing case includes a top plate, a bottom surface facing the top plate, and a peripheral wall connecting the top plate and the bottom surface. The second coil holding member is connected to the top plate and the bottom surface.

Preferably, the difference between the natural frequency of the power transmission unit and the natural frequency of the power reception unit is not more than 10% of the natural frequency of the power reception unit.

Preferably, the coupling coefficient between the power reception unit and the power transmission unit is 0.1 or less.

Preferably, the power transmission unit transmits power to the power reception unit via at least one of a magnetic field which is formed between the power reception unit and the power transmission unit and oscillates at a specific frequency and an electric field which is formed between the power reception unit and the power transmission unit and oscillates at a specific frequency.

A power transfer system according to the present invention is provided with a power transmission device including a power transmission unit, and a power reception device configured to receive power in a non-contact manner from the power transmission device. The power reception device includes a power reception unit configured to receive power in a non-contact manner from the power transmission unit and a first holding unit configured to hold the power reception unit. The power transmission device includes a second holding unit configured to hold the power transmission unit. The power reception unit includes a power reception coil. The power reception coil is formed by winding a first coil wire which has a width greater than a thickness thereof

The first holding unit includes a plurality of first coil holding members each formed with a first groove which extends in an extending direction of the power reception coil and receives the power reception coil. At least a part of the first groove is formed in such a way that a depth of the first groove extending in a width direction of the first coil wire is greater than a width of the first groove extending in a thickness direction of the first coil wire. The power transmission unit includes a power transmission coil. The power transmission coil is formed by winding a second coil wire which has a width greater than a thickness thereof.

The second holding unit includes a plurality of second coil holding members each formed with a second groove which extends in an extending direction of the power transmission coil and receives the power transmission coil. At least a part of the second groove is formed in such a way that a depth of the second groove extending in a width direction of the second coil wire is greater than a width of the second groove extending in a thickness direction of the second coil wire.

Preferably, the difference between the natural frequency of the power transmission unit and the natural frequency of the power reception unit is not more than 10% of the natural frequency of the power reception unit.

Preferably, the coupling coefficient between the power reception unit and the power transmission unit is 0.1 or less.

Preferably, the power reception unit receives power from the power transmission unit via at least one of a magnetic field which is formed between the power reception unit and the power transmission unit and oscillates at a specific frequency and an electric field which is formed between the power reception unit and the power transmission unit and oscillates at a specific frequency.

ADVANTAGEOUS EFFECTS OF INVENTION

According to the power reception device, the power transmission device, and the power transfer system of the present invention, it is possible to reduce dielectric loss while preventing a coil from disengaging.

BRIEF DESCRIPTION OF DRAWINGS

Fig. 1 is a schematic view schematically illustrating a power reception device, a power transmission device and a power transfer system according to an embodiment of the present invention;
Fig. 2 is a view illustrating a simulation model of the power transfer system;
Fig. 3 is a graph illustrating a simulation result.
Fig. 4 is a graph illustrating a relationship between a power transfer efficiency obtained by varying an air gap with the natural frequency fixed and a frequency f of a current supplied to a resonant coil;
Fig. 5 is a diagram illustrating a relationship between a distance from a current source (magnetic current source) and an intensity of an electromagnetic field;
Fig. 6 is a perspective view of the power reception device;
Fig. 7 is an exploded perspective view of the power reception device;
Fig. 8 is a cross sectional view of the power reception device;
Fig. 9 is a perspective view illustrating a power reception unit;
Fig. 10 is a cross sectional view illustrating a coil wire;
Fig. 11 is a cross sectional view illustrating a coil wire;
Fig. 12 is a perspective view illustrating a coil holding member;
Fig. 13 is a side view of the coil holding member illustrated in Fig. 12;
Fig. 14 is a cross sectional view taken along a line XIV-XIV in Fig. 13;
Fig. 15 is a cross sectional view taken along a line XV-XV in Fig. 14;
Fig. 16 is a perspective view of the power transmission device;
Fig. 17 is an exploded perspective view of the power transmission device;
Fig. 18 is a cross sectional view of the power transmission device;
Fig. 19 is a perspective view illustrating a power transmission unit;
Fig. 20 is a cross sectional view illustrating a coil wire;
Fig. 21 is a cross sectional view illustrating a coil wire;
Fig. 22 is a perspective view illustrating a coil holding member;

Fig. 23 is a side view of the coil holding member illustrated in Fig. 22;
Fig. 24 is a cross sectional view taken along a line XXIV-XXIV in Fig. 23; and
Fig. 25 is a cross sectional view taken along a line XXV-XXV in Fig. 24.

DESCRIPTION OF EMBODIMENTS

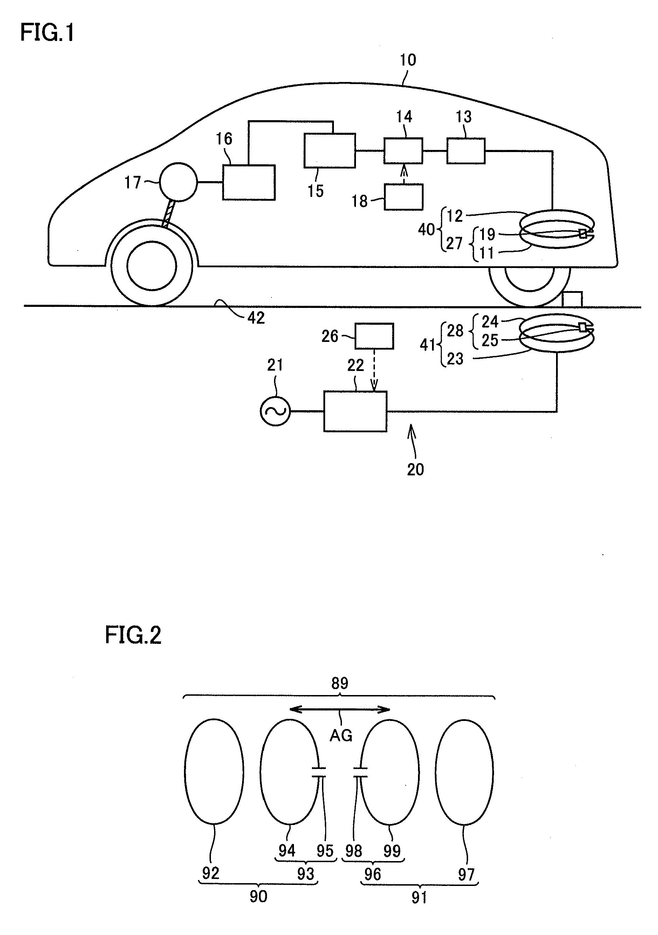

Hereinafter, a power reception device, a power transmission device and a power transfer system including the power reception device and the power transmission device according to an embodiment of the present invention will be described with reference to Figs. 1 to 25. Fig. 1 is a schematic view schematically illustrating a power reception device, a power transmission device and a power transfer system according to the present embodiment.

The power transfer system according to the present embodiment 1 includes an electrically powered vehicle 10 equipped with a power reception device, and an external power supply device 20 equipped with a power transmission device 41. When electrically powered vehicle 10 is parked in a parking space 42 at a predetermined location where power transmission device 41 is disposed, and the power reception device receives power mainly from power transmission device 41.

In order to make electrically powered vehicle 10 stop at the predetermined location, a chock block or a chock line is disposed in parking space 42.

External power supply device 20 includes a high-frequency power driver 22 connected to an AC power source 21, a controller 26 for controlling the driving of high-frequency power driver 22 and the like, and power transmission device 41 connected to high-frequency power driver 22. Power transmission device 41 includes a power transmission unit 28 and an electromagnetic induction coil 23. Power transmission unit 28 includes a resonant coil 24, and a capacitor 25 connected to resonant coil 24. Electromagnetic induction coil 23 is electrically connected to high-frequency power driver 22. It should be noted that although capacitor 25 is provided in the example illustrated in Fig. 1, capacitor 25 is not an essential component.

Power transmission unit 28 includes an electric circuit formed from an inductance of resonant coil 24, a stray capacitance of resonant coil 24, and a capacitance of capacitor 25.

Electrically powered vehicle 10 is equipped with a power reception device 40, a rectifier 13 connected to power reception device 40, a DC/DC converter 14 connected to rectifier 13, a battery 15 connected to DC/DC converter 14, a PCU (power control unit) 16, a motor unit 17 connected to power control unit 16, and a vehicular ECU (Electronic Control Unit) 18 configured to control operation of DC/DC converter 14, power control unit 16 and the like. It should be noted that although electrically powered vehicle 10 according to the present embodiment is a hybrid vehicle equipped with an engine (not shown), the vehicle may be a fuel cell vehicle or an electric vehicle if it is driven by a motor.

Rectifier 13 is connected to electromagnetic induction coil 12, and is configured to covert an alternating current supplied from electromagnetic induction coil 12 into a direct current and supply it to DC/DC converter 14.

DC/DC converter 14 adjusts the voltage of the direct current received from rectifier 13 and supplies it to battery 15. It should be noted that DC/DC converter 14 is not an essential component and may not be disposed. A matching unit for matching the impedance in external power supply device 20 may be disposed between power transmission device 41 and high-frequency power driver 22 to replace DC/DC converter 14.

Power control unit 16 includes a converter connected to battery 15 and an inverter connected to the converter. The converter adjusts (boosts) the direct current supplied from battery 15 and supplies it to the inverter. The inverter converts the direct current supplied from the converter to an alternating current and supplies it to motor unit 17.

Motor unit 17 is adopted from a three-phase AC motor, for example, and is driven by the alternating current supplied from the inverter of power control unit 16.

In the case where electrically powered vehicle 10 is a hybrid vehicle, electrically powered vehicle 10 is further provided with an engine and a power split device, and motor unit 17 includes a motor generator which primarily functions as a generator and a motor generator which primarily functions as a motor.

Power reception device 40 includes a power reception unit 27 and an electromagnetic induction coil 12. Power reception unit 27 includes a resonant coil 11 and a capacitor 19. Resonant coil 11 has a stray capacitance. Therefore, power reception unit 27 contains an electric circuit formed from the inductance of resonant coil 11, and the capacitance of resonant coil 11 and capacitor 19. It should be noted that capacitor 19 is not an essential component and may not be disposed.

In the power transfer system according to the present embodiment, the difference between the natural frequency of power transmission unit 28 and the natural frequency of power reception unit 27 is not more than 10% of the natural frequency of power reception unit 27 or power transmission unit 28. By setting the natural frequencies of power reception unit 27 and power transmission unit 28 in the above range, it is possible to improve the power transfer efficiency. On the other hand, if the natural frequency difference is greater than 10% of the natural frequency of power reception unit 27 or power transmission unit 28, the power transfer efficiency will become less than 10%, which causes such problems as making the charging time of battery 15 longer and the like.

In the case where capacitor 25 is not disposed, the natural frequency of power transmission unit 28 refers to an oscillation frequency at which the electric circuit, which is formed from the inductance of resonant coil 24 and the capacitance of resonant coil 24, oscillates freely. In the case where capacitor 25 is disposed, the natural frequency of power transmission unit 28 refers to an oscillation frequency at which the electric circuit, which is formed from the capacitance of capacitor 25 and resonant coil 24 and the inductance of resonant coil 24, oscillates freely. The resonance frequency of power transmission unit 28 refers to the natural frequency at which a braking force and an electrical resistance are zero in the above electric circuit.

Similarly, in the case where capacitor 19 is not disposed, the natural frequency of power reception unit 27 refers to an oscillation frequency at which the electric circuit, which is formed from the inductance of resonant coil 11 and the capacitance of resonant coil 11, oscillates freely. In the case where capacitor 19 is disposed, the natural frequency of power reception unit 27 refers to an oscillation frequency at which the electric circuit, which is formed from the capacitance of capacitor 19 and resonant coil 11 and the inductance of resonant coil 11, oscillates freely. The resonance frequency of power reception unit 27 refers to the natural frequency at which a braking force and an electrical resistance are zero in the above electric circuit.

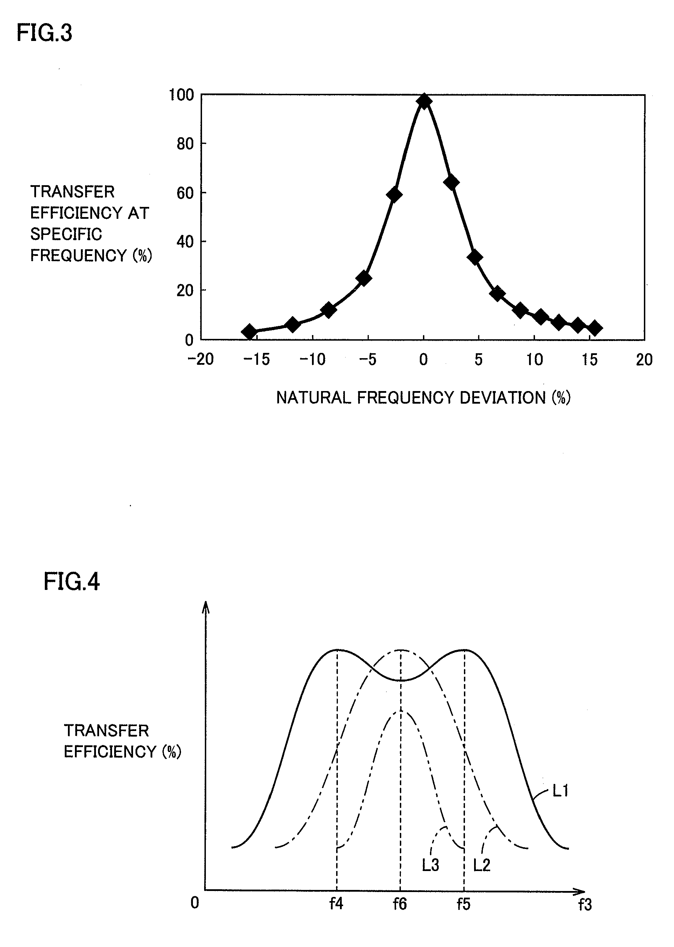

With reference to Figs. 2 and 3, a simulation result analyzing the relationship between the power transfer efficiency and the natural frequency difference will be described. Fig. 2 illustrates a simulation model of a power transfer system. A power transfer system 89 is provided with a power transmission device 90 and a power reception device 91. Power transmission device 90 includes an electromagnetic induction coil 92 and a power transmission unit 93. Power transmission unit 93 includes a resonant coil 94 and a capacitor 95 disposed in resonant coil 94.

Power reception device 91 is provided with a power reception unit 96 and an electromagnetic induction coil 97. Power reception unit 96 includes a resonant coil 99 and a capacitor 98 connected to resonant coils 99.

The inductance of the resonant coil 94 is set as inductance Lt, and the capacitance of capacitor 95 is set as capacitance C1. The inductance of the resonant coil 99 is set as inductance Lr, and the capacitance of capacitor 98 is set as capacitance C2. By setting each parameter in this way, the natural frequency f1 of power transmission unit 93 is represented by the following expression (1), and the natural frequency f2 of power reception unit 96 is represented by the following expression (2).

$$f1 = 1/\{2\pi\,(Lt \times C1)^{1/2}\} \qquad (1)$$

$$f2 = 1/\{2\pi\,(Lr \times C2)^{1/2}\} \qquad (2)$$

In the case where inductance Lr and capacitances C1 and C2 are fixed and only inductance Lt is being varied, the relationship between the power transfer efficiency and the deviation of the natural frequencies between power transmission unit 93 and power reception unit 96 is illustrated in Fig. 3. Note that in the simulation, the relative positional relationship between resonant coil 94 and the resonant coil 99 is fixed, and the frequency of the current supplied to power transmission unit 93 is constant.

In the graph illustrated in Fig. 3, the horizontal axis represents the natural frequency deviation (%), and the vertical axis represents the transfer efficiency at a specific frequency (%). The natural frequency deviation (%) is represented by the following expression (3).

$$(\text{the natural frequency deviation}) = \{(f1 - f2)/f2\} \times 100\ (\%) \qquad (3)$$

It is obvious from Fig. 3 that the power transfer efficiency is 100% when the natural frequency deviation (%) is ±0%, the power transfer efficiency is 40% when the natural frequency deviation (%) is ±5%, the power transfer efficiency is 10% when the natural frequency deviation (%) is ±10%, and the power transfer efficiency is 5% when the natural frequency deviation (%) is +15%. In other words, it can been seen that it is possible to improve the power transfer efficiency by setting the respective natural frequency of the power transmission unit and the power reception unit so that the absolute value of the natural frequency deviation (%) (the difference between the natural frequencies) is in the range of not more than 10% of the natural frequency of power reception unit 96. In the present embodiment, an electromagnetic field analysis software (JMAG manufactured by JSOL Corporation Ltd.) is used as the simulation software.

Hereinafter, the operations of the power transfer system according to the present embodiment will be described.

In Fig. 1, an AC power is supplied from high-frequency power driver 22 to electromagnetic induction coil 23.

As a predetermined alternating current flows through electromagnetic induction coil 23, an alternating current is generated through electromagnetic induction to flow through resonant coil 24. At this time, the power is supplied to electromagnetic induction coil 23 in such a way that the alternating current flowing through resonant coil 24 has a specific frequency.

As the current of the specific frequency flows through resonant coil 24, an electromagnetic field is formed around resonant coil 24, oscillating at the specific frequency.

Resonant coil 11 is disposed within a predetermined distance from resonant coil 24, and resonant coil 11 is configured to receive power via the electromagnetic field formed around resonant coil 24.

In the present embodiment, a so-called helical coil is adopted as resonant coil 24 and resonant coil 11. Therefore, a magnetic field oscillating at a specific frequency is primarily formed around resonant coil 24, and resonant coil 11 receives power via the magnetic field.

Hereinafter, the magnetic field of a specific frequency formed around resonant coil 24 will be described. Typically, in "the magnetic field of a specific frequency", the power transfer efficiency is associated with the frequency of the current supplied to resonant coil 24. First, the relationship between the power transfer efficiency and the frequency of the current supplied to resonant coil 24 will be explained. The power transfer efficiency in transferring power from resonant coil 24 to resonant coil 11 varies according to various factors such as the distance between resonant coil 24 and resonant coil 11. For example, the natural frequency (resonance frequency) of power reception unit 27 and power transmission unit 28 is set as natural frequency $f0$, the frequency of the current supplied to resonant coil 24 is set as frequency $f3$, and an air gap between resonant coil 11 and resonant coil 24 is set as air gap AG.

Fig. 4 is a graph illustrating the relationship between the power transfer efficiency obtained by varying air gap AG with natural frequency $f0$ fixed and frequency $f3$ of the current supplied to resonant coil 24.

In the graph illustrated in Fig. 4, the horizontal axis represents frequency $f3$ of the current supplied to resonant coil 24, and the vertical axis represents the power transfer efficiency (%). Efficiency curve L1 schematically illustrates the relationship between the power transfer efficiency when air gap AG is small and frequency $f3$ of the current which is supplied to resonant coil 24. As illustrated by efficiency curve L1, when air gap AG is small, the peaks of the power transfer efficiency appear at frequencies $f4$ and $f5$ ($f4 < f5$), respectively. As air gap AG increases, two peaks where the power transfer efficiency is great begin to approach each other. As illustrated by efficiency curve L2, as air gap AG becomes greater than a predetermined distance, the power transfer efficiency has only one peak, i.e., the power transfer efficiency peaks at frequency $f6$ which is the frequency of the current supplied to resonant coil 24. As air gap AG becomes further greater than that for efficiency curve L2, as illustrated by efficiency curve 3, the peak of the power transfer efficiency decreases.

As an approach to improve the power transfer efficiency, for example, a first approach to be described in the following may be given. According to the first approach, the characteristics of the power transfer efficiency between power reception unit 27 and power transmission unit 28 may be varied by varying the capacitance of capacitor 19 and/or capacitor 25 in accordance with air gap AG while keeping constant the frequency of the current to be supplied to resonant coil 24 illustrated in Fig. 1. In this approach, the frequency of the current flowing through resonant coil 11 and resonant coil 24 is kept constant irrespective of the size of air gap AG.

As a second approach, the frequency of the current to be supplied to resonant coil 24 is adjusted on the basis of the size of air gap AG. For example, in the case where the power transfer efficiency is characterized by efficiency curve L1 illustrated in Fig. 4, a current of frequency $f4$ or $f5$ is supplied to resonant coil 24. Moreover, in the case where the power transfer efficiency is characterized by efficiency curve L2 or L3, a current of frequency $f6$ is supplied to resonant coil 24. In this approach, the frequency of the current flowing through resonant coil 11 and resonant coil 24 is varied in accordance with the size of air gap AG.

In the first approach, the frequency of the current flowing through resonant coil 24 is fixed at a constant frequency, while in the second approach, the frequency of the current flowing through resonant coil 24 is varied appropriately according to air gap AG. In order to improve the power transfer efficiency, a current is set to a specific frequency according to the first approach or the second approach and is supplied to resonant coil 24. As the current of the specific frequency flows through resonant coil 24, a magnetic field (electromagnetic field) which oscillates at the specific frequency is formed around resonant coil 24. Power reception unit 27 receives power from power transmission unit 28 via the magnetic field which is formed between power reception unit 27 and power transmission unit 28 and oscillates at the specific frequency. Thus, the "magnetic field which oscillates at a specific frequency" is not necessarily limited to a magnetic field having a fixed frequency. In the above example, it is described that the frequency of the current to be supplied to resonant coil 24 is set focusing on air gap AG. Since the power transfer efficiency may vary according to the other factors, the frequency of the current to supplied to resonant coil 24 may be adjusted on the basis of the other factors.

In the present embodiment, as an example, it is described that a helical coil is adopted as the resonant coil. However, in the case where an antenna such as a meander line antenna is adopted as the resonant coil, an electric field of a specific frequency is formed around resonant coil 24 by flowing a current of the specific frequency through resonant coil 24, and the power is transferred between power transmission unit 28 and power reception unit 27 via the electric field.

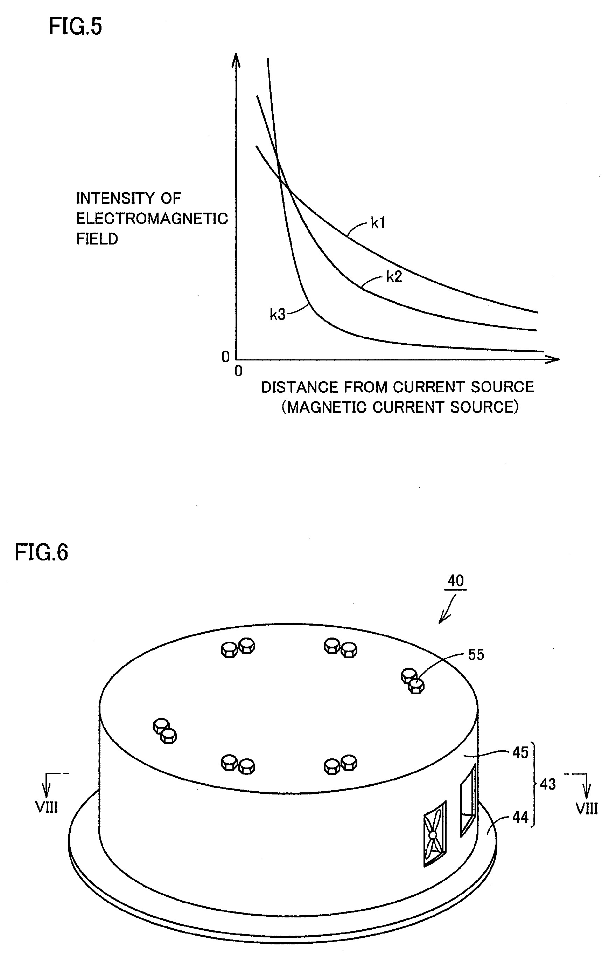

In the power transfer system according to the present embodiment, the improvement on the power transmission efficiency and the power reception efficiency is achieved by utilizing a near field where an "electrostatic field" in the electromagnetic field is dominant (evanescent field). Fig. 5 is a diagram illustrating the relationship between the intensity of the electromagnetic field and the distance from the current source (magnetic current source). With reference to Fig. 5, the electromagnetic field consists of three components. Curve k1 is a component inversely proportional to the distance from the wave source, and is referred to as a "radiation field". Curve k2 is a component inversely proportional to the square of the distance from the wave source, and is referred to as an "induction field". Curve k3 is a component inversely proportional to the cube of the distance from the wave source, and is referred to as an "electrostatic field". If the wavelength of the electromagnetic field is set as "$\lambda$", then, the distance where the intensity of the "radiation field" and the intensity of the "induction field" and the intensity of the "electrostatic field" are approximately equal to each other can be denoted by $\lambda/2\pi$.

The "electrostatic field" is a region where the intensity of the electromagnetic wave decreases rapidly with the increase of distance from the wave source, and in the power transfer system according to the present embodiment, the transfer of energy (power) is conducted by utilizing a near field where the "electrostatic field" is dominant (evanescent field). In other words, the energy (power) is transferred from power transmission unit 28 to power reception unit 27 on the other side through resonating power transmission unit 28 and power reception unit 27 (for example, a pair of LC resonant coils) having the same natural frequency in a near field with dominant "electrostatic field". Since the "electrostatic field" does not propagate energy far away, compared to an electromagnetic wave which transfers energy (power) by propagating energy far away via the "radiation field", the resonance method can transmit power with less energy loss.

As mentioned, in the power transfer system according to the present embodiment, power is transmitted from power transmission device 41 to the power reception device by the way of resonating power reception unit 27 and power transmission unit 28 via an electromagnetic field. The coupling coefficient ($\kappa$) between power transmission unit 28 and power reception unit 27 is 0.1 or less. Generally in transferring power by utilizing the electromagnetic induction, the coupling coefficient ($\kappa$) between the power transmission unit and the power reception unit is close to 1.0.

In the power transfer according to the present embodiment, the coupling between power transmission unit 28 and power reception unit 27 refers to, for example, "magnetic resonance coupling", "magnetic field resonance coupling ", "electromagnetic field resonance coupling" or "electric field resonance coupling".

"Electric field resonance coupling" includes any of "magnetic resonance coupling", "magnetic field resonance coupling" and "electric field resonance coupling".

Since an antenna of a coil shape is adopted as resonant coil 11 of power reception unit 27 and resonant coil 24 of power transmission unit 28 described in the specification, power reception unit 27 and transmission unit 28 are mainly coupled via the magnetic field, and the coupling between power reception unit 27 and power transmission section 28 is "magnetic resonance coupling" or "magnetic field resonance coupling".

However, it is also possible to adopt an antenna such as a meander line antenna as resonant coils 11 and 24. In this case, power reception unit 27 and power transmission unit 28 are mainly coupled via an electric field. The coupling between power reception unit 27 and power transmission section 28 is "electric field resonance coupling".

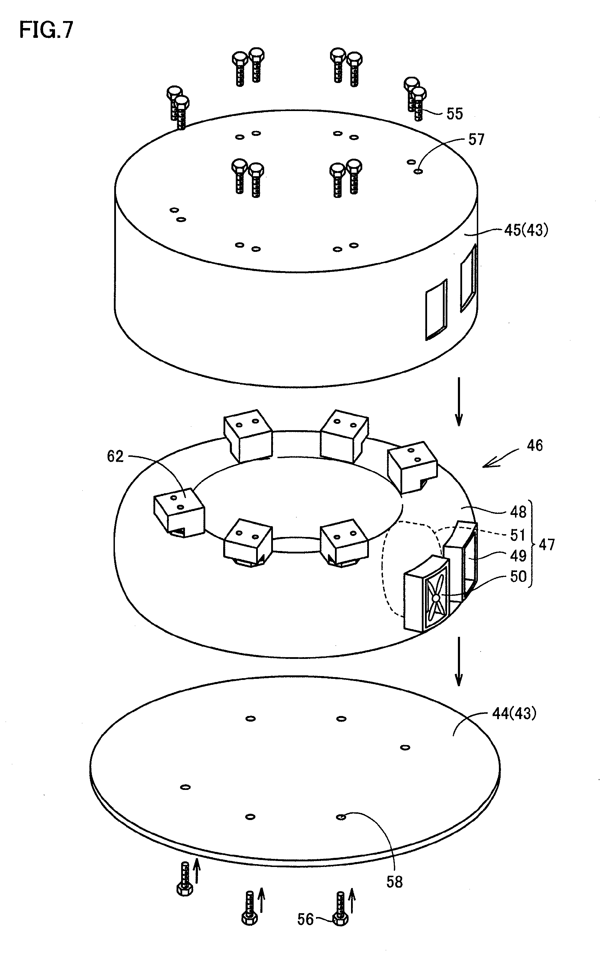

Fig. 6 is a perspective view illustrating power reception device 40, and Fig. 7 is an exploded perspective view of power reception device 40. As illustrated in Figs. 6 and 7, power reception device 40 includes a housing 43, and a unit 46 housed in housing 43.

Housing 43 includes a shield 45 which is formed to have an open lower surface and a cover 44 for closing the open lower surface of shield 45. Shield 45 is formed from a metal material, and is configured to define a region where an electromagnetic field is formed around the resonant coil. Shield 45 includes a top plate and a peripheral wall hanging downward from the peripheral edge of the top plate. The electromagnetic field formed around the resonant coil radiates downward.

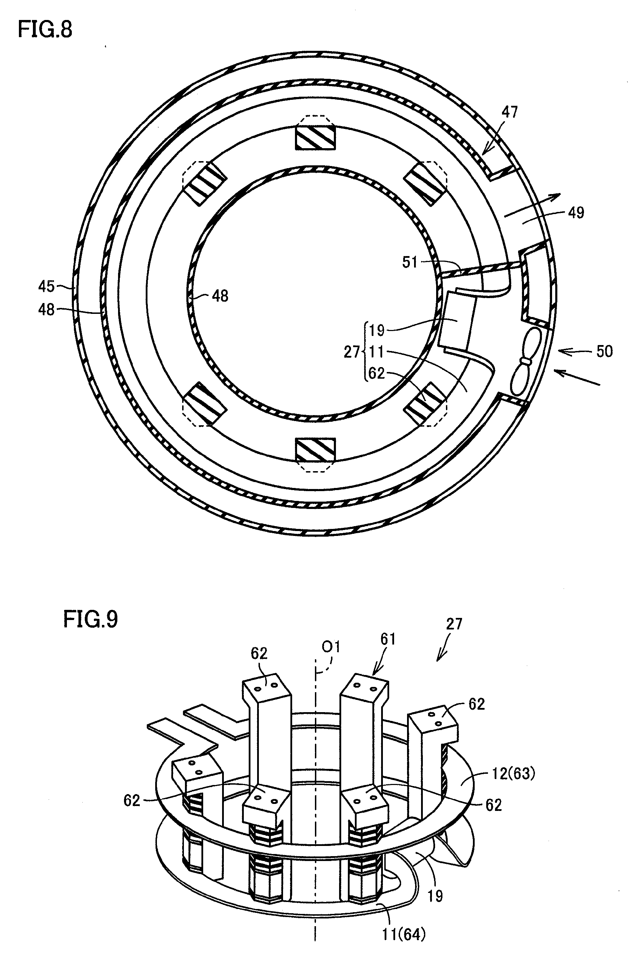

Fig. 8 is a cross sectional view of the power reception device. In Figs. 7 and 8, unit 46 includes power reception unit 27 and a cooling device 47 for cooling power reception unit 27. Cooling device 47 includes a tube 48 formed into a shape of an annular cylinder, an exhaust port 49 formed at the peripheral surface of tube 48, a blower 50 disposed at the peripheral surface of tube 48, and a partition member 51 formed inside tube 48. Tube 48 is formed hollow inside, and blower 50 is configured to supply cooling air into tube 48 and discharge air out of tube 48 via exhaust port 49. Blower 50 is connected to an opening formed in shield 45, and exhaust port 49 is connected to an opening formed in shield 45. Partition member 51 is disposed between exhaust port 49 and blower 50 to partition the interior of tube 48. Power reception unit 27 is disposed inside tube 48.

Fig. 9 is a perspective view illustrating power receiving unit 27. Power reception unit 27 includes electromagnetic induction coil 12, resonant coil 11, capacitor 19, and a holding unit 61. Electromagnetic induction coil 12 and resonant coil 11 each have approximately one turn. Electromagnetic induction coil 12 is formed by winding a coil wire 63 around the periphery of a center line O1. Resonant coil 11 is formed by winding a coil wire 64 around the periphery of center line O1.

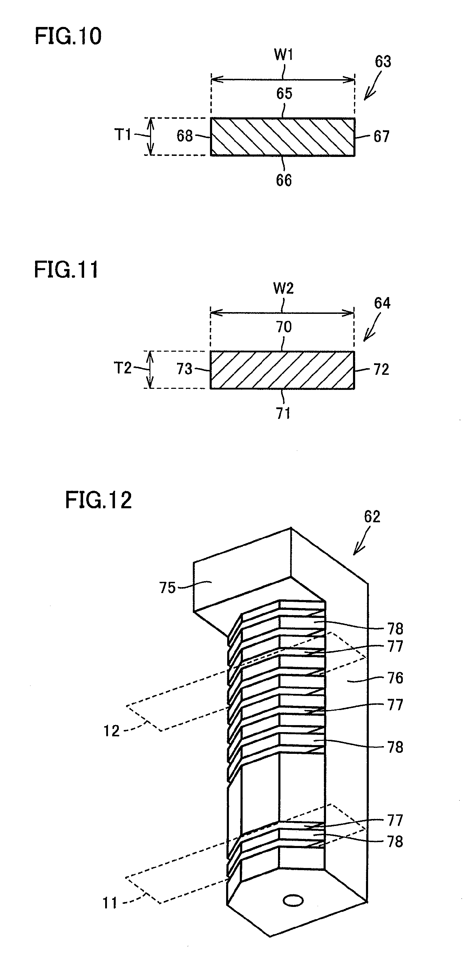

Fig. 10 is a cross sectional view illustrating coil wire 63, and Fig. 11 is a cross sectional view illustrating coil wire 64. The width W1 of coil wire 63 is greater than the thickness T1 thereof. Coil wire 63 includes a main surface 65 and a main surface 66 which are arranged in the thickness direction, and a side surface 67 and a side surface 68 which are arranged in the width direction in connection with main surface 65 and main surface 66.

Electromagnetic induction coil 12 is formed by bending coil wire 63 in such a way that side surface 67 is positioned at the inner peripheral side and side surface 68 is positioned at the outer peripheral side. Thereby, main surface 65 and main surface 66 are arranged along the extending direction of center line O1.

In Fig. 11, the width W2 of coil wire 64 is greater than the thickness T2 thereof. Coil wire 64 includes a main surface 70 and a main surface 71 which are arranged in the thickness direction, and a side surface 72 and a side surface 73 which are arranged in the width direction in connection with main surface 70 and main surface 71.

Resonant coil 11 is formed in such a way that side surface 72 is positioned at the inner peripheral side and side surface 73 is positioned at the outer peripheral side. Main surface 70 and main surface 71 are arranged along the extending direction of center line O1. The thickness of the coil wire will be explained. In the cross section along the direction perpendicular to the extending direction of the coil wire, the longest side in the peripheral sides of the cross section is set as a long side. An average length of sides in the direction perpendicular to the long side is set as the thickness of the wire. An average length of sides in the direction perpendicular to the thickness direction is set as the width. For example, in the example illustrated in Fig. 11, the cross section of coil wire 64 perpendicular to the extending direction of coil wire 64 has a rectangular shape. The sides defined by main surface 70 and main surface 71 are the long sides. The length in the direction perpendicular to main surface 70 or main surface 71 is the thickness of coil wire 64. In the example illustrated in Fig. 11, the arrangement direction of side surface 72 and side surface 73 is perpendicular to main surface 70 and main surface 71. Thus, in the example illustrated in Fig. 11, the distance between side surface 72 and side surface 73 is the width of coil wire 64.

As described in the above, although resonant coil 11 and electromagnetic induction coil 12 are formed respectively by coil wire 63 and coil wire 64 each having the cross section of a rectangular shape, any coil wire having a cross section of various shapes can be used to form resonant coil 11 and electromagnetic induction coil 12. For example, it is possible to adopt a coil wire having a cross section of a polygonal shape such as a pentagonal shape or a hexagonal shape, an oblong shape or an elliptical shape.

By adopting a coil wire having such shape, it is possible to increase the surface area of resonant coil 11 and electromagnetic induction coil 12 in comparison with a round wire coil having the same cross sectional area.

During the transfer of power, a high-frequency current will flow through resonant coil 11 and electromagnetic induction coil 12. As the high-frequency current flows therethrough, due to the surface effect, the current flows through the surface of each coil. Therefore, by increasing the surface area of each coil as described above, it is possible to reduce the resistance of each coil.

In the example illustrated in Fig. 9, resonant coil 11 may be a coil of a multilayer winding. In this case, the surface area facing center line O1 is increased, making it possible to increase the stray capacitance generated in resonant coil 11.

In Fig. 9, holding unit 61 is configured to hold resonant coil 11 and electromagnetic induction coil 12, and holding unit 61 includes a plurality of coil holding members 62. Coil holding members 62 are disposed at the inner peripheral side of resonant coil 11 and electromagnetic induction coil 12, and coil holding members 62 are disposed in multiple numbers spaced with intervals in the extending direction of resonant coil 11 and electromagnetic induction coil 12. Since coil holding members 62 are disposed at the inner peripheral side of resonant coil 11 and electromagnetic induction coil 12, it is possible to make power reception unit 27 more compact in comparison with the case where coil holding members 62 are arranged at the outer peripheral side of resonant coil 11 and electromagnetic induction coil 12.

In addition, the plurality of coil holding members 62 may be arranged alternately at the outer peripheral side and the inner peripheral side of resonant coil 11 and electromagnetic induction coil 12.

Both ends of resonant coil 11 are drawn to the inner side of resonant coil 11, and capacitor 19 is connected to both ends of resonant coil 11. Thus, by disposing capacitor 19 inside resonant coil 11, it is possible to make power reception unit 27 more compact.

In Fig. 7, an upper end and a lower end of each coil holding member 62 are formed to protrude from tube 48.

The upper end surface and the lower end surface of coil holding member 62 are formed with a bolt hole. The top plate of shield 45 is formed with a hole 57 at a position corresponding to the hole formed on the upper end surface of coil holding member 62, cover 44 is formed with a hole 58 at a position corresponding to the hole formed on the lower end surface of coil holding member 62.

The upper end of coil holding member 62 is fixed to the top plate of shield 45 by a bolt 55, and the lower end of coil holding member 62 is fixed to cover 44 by a bolt 56.

Accordingly, shield 45, unit 46 (power reception unit 27) and cover 44 are unified.

The upper end of coil holding member 62 is connected to the top plate of shield 45, and the lower end of coil holding member 62 is fixed to cover 44. Thus, coil holding member 62 is connected to both the top plate and the bottom surface of housing 43, and thereby, the rigidity of housing 43 is increased by coil holding member 62.

Thus, suppose that there is an external force applied to the power reception device, it is possible to prevent housing 43 from deforming.

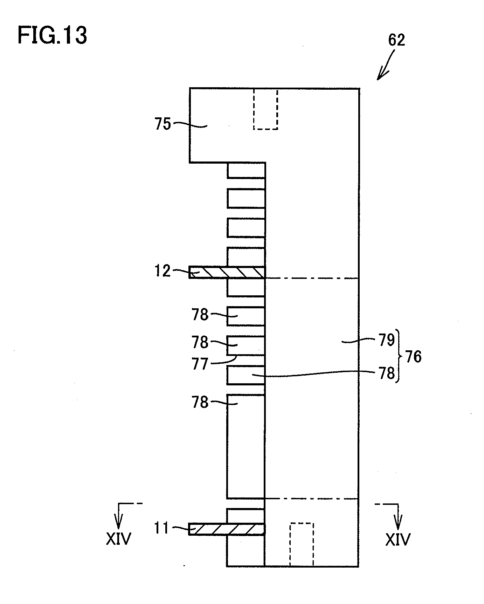

Fig. 12 is a perspective view illustrating coil holding member 62. Fig. 13 is a side view of coil holding member 62 illustrated in Fig. 12. As illustrated in Figs. 12 and 13, coil holding member 62 includes a base 75, and a pillar 76 connected to base 75. Pillar 76 includes a main body portion 79, and a plurality of support portions 78 formed on the peripheral surface of main body portion 79 and spaced with intervals along the height direction of main body portion 79. A groove 77 is formed between support portions 78. Resonant coil 11 and electromagnetic induction coil 12 are embedded in groove 77.

Since groove 77 is formed in multiple numbers along the height direction of pillar 76, it is possible to properly adjust where to embed resonant coil 11 and electromagnetic induction coil 12.

By adjusting the distance between resonant coil 11 and electromagnetic induction coil 12, it is possible to adjust the impedance of the vehicle side.

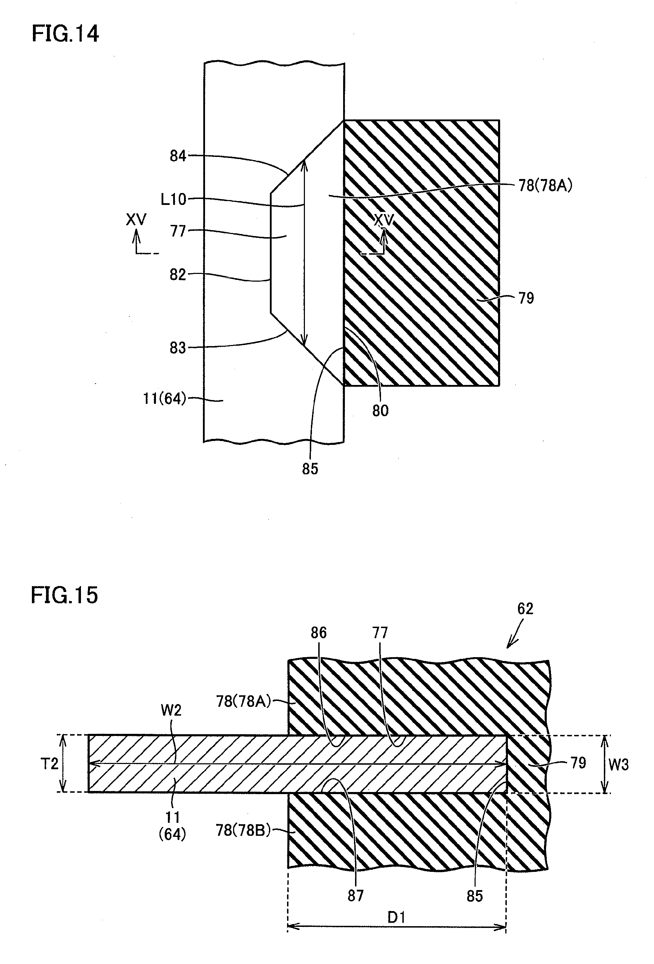

Fig. 14 is a cross sectional view taken along line XIV-XIV illustrated in Fig. 13. As illustrated in Fig. 14, support portion 78 is formed to protrude from main body portion 79.

Fig. 15 is a cross sectional view taken along line XV-XV illustrated in Fig. 14. As illustrated in Fig. 15, coil holding member 62 includes a support portion 78A disposed adjacent to groove 77 for supporting resonant coil 11 and a support portion 78B disposed at the opposite side of support portion 78A relative to groove 77. Thus, groove 77 is formed between two support portions 78A and 78B. A bottom surface 85 of groove 77 is defined by main body portion 79, and inner side surfaces 86 and 87 of groove 77 are defined support portions 78A and 78B.

The depth D1 of groove 77 extends in the width direction of coil wire 64 which forms resonant coil 11, and the width W3 of groove 77 extends in the thickness direction of coil wire 64. Further as illustrated in Fig. 14, groove 77 extends in the extending direction of resonant coils 11.

It is apparent from Fig. 15 that depth D1 of groove 77 is formed greater than width W3 thereof. In the present embodiment, in groove 77, a position closest to the winding center of resonant coil 11 is set as an opening of groove 77. Accordingly, bottom surface 85 is a portion on the inner circumferential surface of groove 77 which faces the aforementioned opening. Depth D1 of groove 77 is a span from the opening to bottom surface 85, the length of groove 77 is a span in the extending direction of resonant coil 11, and the width of groove 77 is a span in the thickness direction of the coil wire being inserted therein.

Coil holding member 62 is formed from an insulating resin material. During the transfer of power, a high-voltage current flows through resonant coil 11, and accordingly, resonant coil 11 will be subjected to a high temperature. When resonant coil 11 is subjected to a high temperature, support portions 78A and 78B will expand.

Thus, width W3 of groove 77 becomes smaller, and accordingly, the surface pressure applied by support portions 78A and 78B to resonant coil 11 being inserted in groove 77 increases.

When main body portion 79 is heated, main body portion 79 deforms by decreasing depth D1 of groove 77. Meanwhile, since width W3 of groove 77 is smaller than depth D1 of groove 77, when coil holding member 62 is heated, the amount of deformation by which width W3 of groove 77 becomes narrower is relatively greater than the amount of deformation by which depth D1 thereof becomes smaller.

As a result, coil holding member 62 is thermally expanded by the heat from resonant coil 11 or the like, and consequently, the holding force for coil holding member 62 to hold resonant coil 11 is increased, preventing resonant coil 11 from disengaging.

Although it is described by using Fig. 15 and the like that the holding force for holding resonant coil 11 is increased, similarly in the case when coil holding member 62 is heated by the heat from electromagnetic induction coil 12, the holding force for holding member 62 to hold electromagnetic induction coil 12 is also improved.

The width W2 of resonant coil 11 is designed to be greater than depth D1 of groove 77, and thereby resonant coil 11 protrudes out of groove 77. Accordingly, as illustrated in Fig. 8, resonant coil 11 is satisfactorily cooled by the cooling air introduced into tube 48 by blower 50.

In Fig. 14, when viewed from a position away from support portions 78 in the aligning direction of support portions 78, each support portion 78 is formed into a trapezoidal shape. Specifically, support portion 78 includes a long side portion 80 connected to main body portion 79, side portions 83 and 84, and a short side portion 82.

Support portion 78A is formed in such a way that the length L10 in the extending direction of resonant coil 11 increases as heading toward bottom surface 85 of groove 77. In other words, since side portions 83 and 84 of support portion 78A are formed into a tapered shape, the exposed area of resonant coil 11 is increased. Thereby, an area of resonant coil 11 to be cooled by the cooling air increases, which makes it possible to cool resonant coil 11 satisfactorily. It is also acceptable to curve side portions 83 and 84.

Moreover, since support portion 78B facing support portion 78A is also formed in a way similar to support portion 78A, it is possible to facilitate the insertion of resonant coil 11 into groove 77, and thereby improve the assembly efficiency.

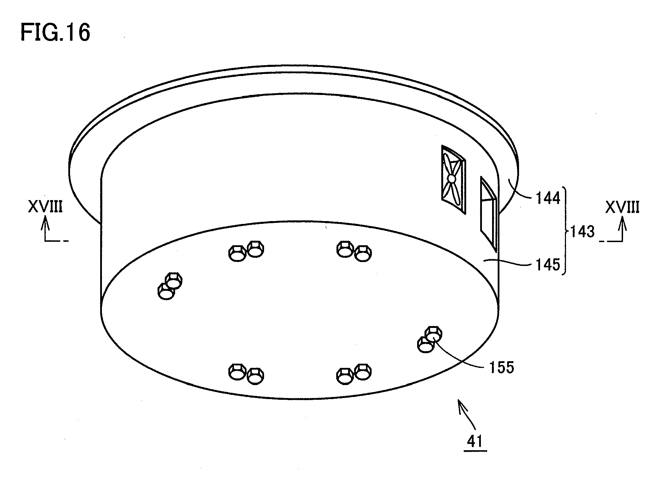

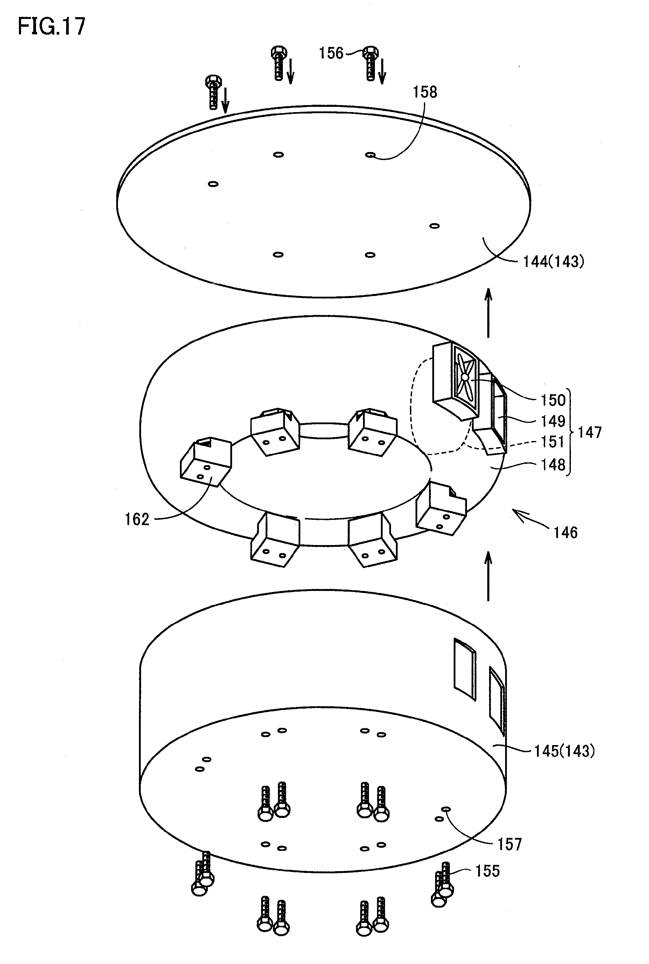

Fig. 16 is a perspective view illustrating power transmission device 41, and Fig. 17 is an exploded perspective view of power transmission device 41. As illustrated in Figs. 16 and 17, power transmission device 41 includes a housing 143, and a unit 146 housed in housing 143.

Housing 143 includes a shield 145 which is formed to have an open upper surface and a cover 144 for closing the open upper surface of shield 145. Shield 145 is formed from a metal material, and is configured to define a region where an electromagnetic field is formed around the resonant coil. Shield 145 includes a bottom surface and a peripheral wall erecting upward from the peripheral edges of the bottom surface. The electromagnetic field formed around the resonant coil radiates upward.

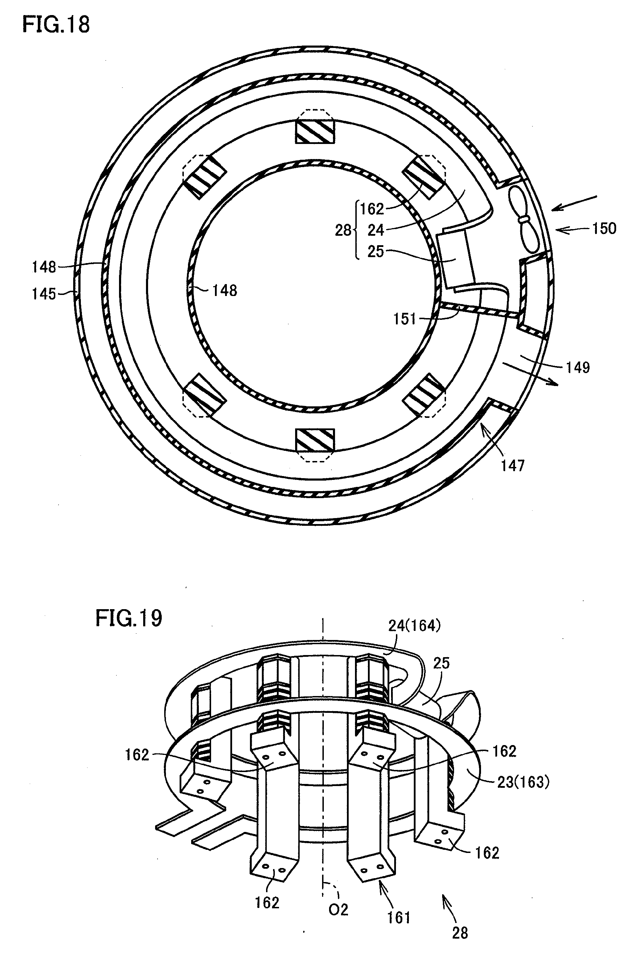

Fig. 18 is a cross sectional view of power transmission device 41. In Figs. 17 and 18, unit 146 includes power transmission unit 28 and a cooling device 147 for cooling power transmission unit 28. Cooling device 147 includes a tube 148 formed into a shape of an annular cylinder, an exhaust port 149 formed at the peripheral surface of tube 148, a blower 150 disposed at the peripheral surface of tube 148, and a partition member 151 formed inside tube 148. Tube 148 is formed hollow inside, and blower 150 is configured to supply cooling air into tube 148 and discharge air out of tube 148 via exhaust port 149. Blower 150 is connected to an opening formed in shield 145, and exhaust port 149 is connected to an opening formed in shield 145. Partition member 151 is disposed between exhaust port 149 and blower 150 to partition the interior of tube 148. Power transmission unit 28 is disposed inside tube 148.

Fig. 19 is a perspective view illustrating power transmission unit 28. Power transmission unit 28 includes electromagnetic induction coil 23, resonant coil 24, a capacitor 23, and a holding unit 161. Electromagnetic induction coil 23 and resonant coil 24 each have approximately one turn. Electromagnetic induction coil 23 is formed by winding a coil wire 163 around the periphery of a center line 02. Resonant coil 24 is formed by winding a coil wire 164 around the periphery of center line 02.

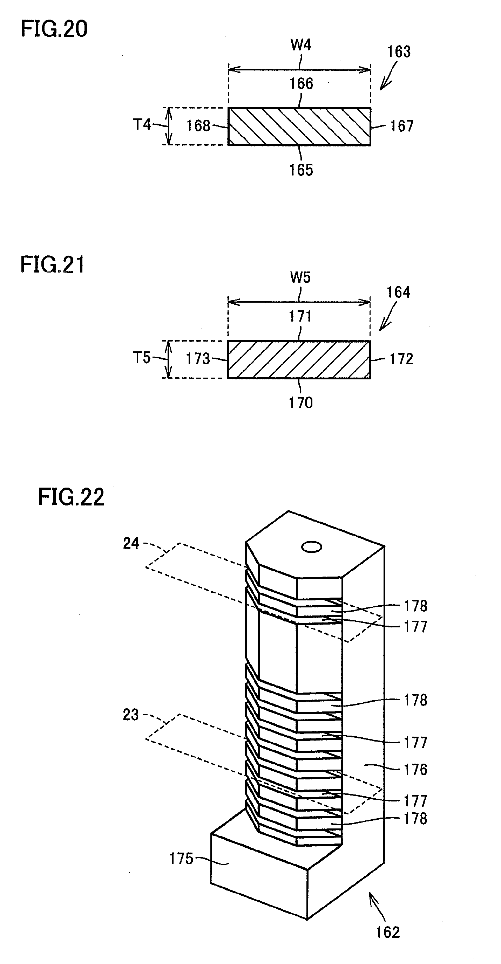

Fig. 20 is a cross sectional view illustrating coil wire 163, and Fig. 21 is a cross sectional view illustrating coil wire 164. The width W4 of coil wire 163 is greater than the thickness T4 thereof. Coil wire 163 includes a main surface 165 and a main surface 166 which are arranged in the thickness direction, and a side surface 167 and a side surface 168 which are arranged in the width direction in connection with main surface 165 and main surface 166.

The thickness of the coil wire will be explained. In the cross section along the direction perpendicular to the extending direction of the coil wire, the longest side in the peripheral sides of the cross section is set as a long side. An average length of sides in the direction perpendicular to the long side is set as the thickness of the wire. An average length of sides in the direction perpendicular to the thickness direction is set as the width.

For example, in the example illustrated in Fig. 21, the cross section of coil wire 164 perpendicular to the extending direction of coil wire 164 has a rectangular shape. The sides defined by a main surface 170 and a main surface 171 are the long sides. The length in the direction perpendicular to main surface 170 or main surface 171 is the thickness of coil wire 164. In the example illustrated in Fig. 21, the arrangement direction of a side surface 172 and a side surface 173 is perpendicular to main surface 170 and main surface 171. Thus, in the example illustrated in Fig. 21, the distance between side surface 172 and side surface 173 is the width of coil wire 164.

Electromagnetic induction coil 23 is formed by bending coil wire 163 in such a way that side surface 167 is positioned at the inner peripheral side and side surface 168 is positioned at the outer peripheral side. Thereby, main surface 165 and main surface 166 are arranged along the extending direction of center line 02.

In Fig. 21, the width W5 of coil wire 164 is greater than the thickness T5 thereof. Coil wire 164 includes main surface 170 and main surface 171 which are arranged in the thickness direction, and side surfaces 172 and side surface 173 which are arranged in the width direction in connection with main surface 170 and main surface 171.

Resonant coil 24 is formed in such a way that side surface 172 is positioned at the inner peripheral side and side surface 173 is positioned at the outer peripheral side. Main surface 170 and main surface 171 are arranged along the extending direction of center line 02.

As described in the above, although resonant coil 24 and electromagnetic induction coil 23 are formed respectively by coil wire 163 and coil wire 164 each having the cross section of a rectangular shape, any coil wire having a cross section of various shapes can be used to form resonant coil 24 and electromagnetic induction coil 23. For example, it is possible to adopt a coil wire having a cross section of a polygonal shape such as a pentagonal shape or a hexagonal shape, an oblong shape or an elliptical shape.

By adopting a coil wire having such shape, it is possible to increase the surface area of resonant coil 24 and electromagnetic induction coil 23 in comparison with a round wire coil having the same cross sectional area.

During the transfer of power, a high-frequency current will flow through resonant coil 24 and electromagnetic induction coil 23. As the high-frequency current flows therethrough, due to the surface effect, the current flows through the surface of each coil. Therefore, by increasing the surface area of each coil as described above, it is possible to reduce the resistance of each coil.

In the example illustrated in Fig. 19, resonant coil 24 may be a coil of a multilayer winding. In this case, the surface area facing center line 02 is increased, making it possible to increase the stray capacitance generated in resonant coil 24.

In Fig. 19, holding unit 161 is configured to hold electromagnetic induction coil 23 and resonant coil 24, and holding unit 161 includes a plurality of coil holding members 162. Coil holding members 162 are disposed at the inner peripheral side of resonant coil 24 and electromagnetic induction coil 23, and coil holding members 162 are disposed in multiple numbers spaced with intervals in the extending direction of resonant coil 24 and electromagnetic induction coil 23. Since coil holding members 162 are disposed at the inner peripheral side of resonant coil 24 and electromagnetic induction coil 23, it is possible to make power transmission unit 28 more compact in comparison with the case where coil holding members 162 are arranged at the outer peripheral side of resonant coil 24 and electromagnetic induction coil 23.

In addition, the plurality of coil holding members 162 may be arranged alternately at the outer peripheral side and the inner peripheral side of resonant coil 24 and electromagnetic induction coil 23.

Both ends of resonant coil 24 are drawn to the inner side of resonant coil 24, and capacitor 23 is connected to both ends of resonant coil 24. Thus, by disposing capacitor 23 inside resonant coil 24, it is possible to make power transmission unit 28 more compact.

In Fig. 17, an upper end and a lower end of each coil holding member 162 are formed to protrude from tube 148.

The upper end surface and the lower end surface of coil holding member 162 are formed with a bolt hole. The bottom surface of shield 145 is formed with a hole 157 at a position corresponding to the hole formed on the upper end surface of coil holding member 162, cover 144 is formed with a hole 158 at a position corresponding to the hole formed on the upper end surface of coil holding member 162.

The lower end of coil holding member 162 is fixed to the bottom surface of shield 145 by a bolt 155, and the upper end of coil holding member 162 is fixed to cover 144 by a bolt 156.

Accordingly, shield 145, unit 146 (power transmission unit 28) and cover 144 are unified.

The lower end of coil holding member 162 is connected to the bottom surface of shield 145, and the upper end of coil holding member 62 is fixed to cover 144. Thus, coil holding member 162 is connected to both the top plate and the bottom surface of housing 143, and thereby, the rigidity of housing 143 is increased by coil holding member 162.

Thus, suppose that there is an external force applied to the power transmission device 41, it is possible to prevent housing 143 from deforming.

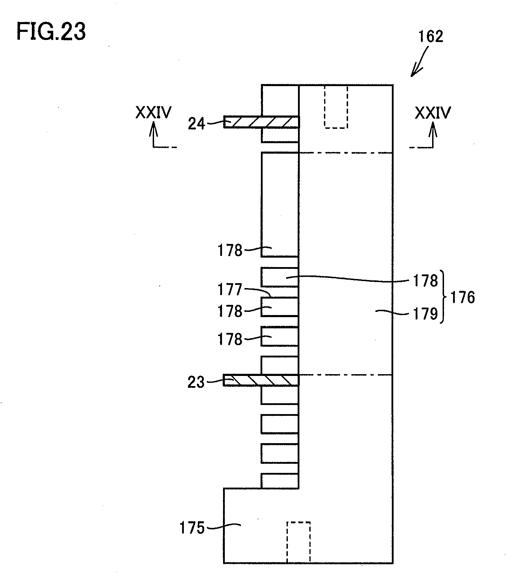

Fig. 22 is a perspective view illustrating coil holding member 162. Fig. 23 is a side view of coil holding members 162 illustrated in Fig. 22. As illustrated in Figs. 22 and 23, coil holding member 162 includes a base 175, and a pillar 176 connected to base 175. Pillar 176 includes a main body portion 179, and a plurality of support portions 178 formed on the peripheral surface of main body portion 179 and spaced with intervals along the height direction of main body portion 179. A groove 177 is formed between support portions 178. Resonant coil 24 and electromagnetic induction coil 23 are embedded in groove 177.

Since groove 177 is formed in multiple numbers along the height direction of pillar 176, it is possible to properly adjust where to embed resonant coil 24 and electromagnetic induction coil 23.

By adjusting the distance between resonant coil 24 and electromagnetic induction coil 23, it is possible to adjust the impedance of the vehicle side.

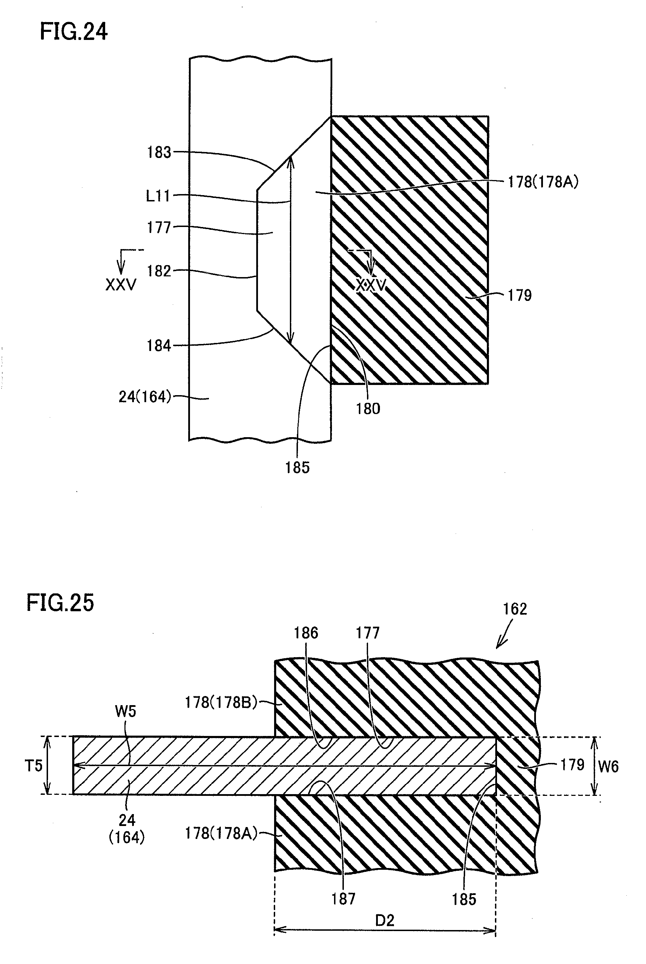

Fig. 24 is a cross sectional view taken along line XXIV-XXIV illustrated in Fig. 23. As illustrated in Fig. 24, support portion 178 is formed to protrude from main body portion 179.

Fig. 25 is a cross sectional view taken along line XXV-XXV illustrated in Fig. 24. As illustrated in Fig. 25, coil holding member 162 includes a support portion 178A disposed adjacent to groove 177 for supporting resonant coil 24 and a support portion 178B disposed at the opposite side of support portion 178A relative to groove 177. Thus, groove 177 is formed between two support portions 178A and 178B. A bottom surface 185 of groove 177 is defined by main body portion 179, and inner side surfaces 186 and 187 of groove 177 are defined support portions 178A and 178B.

The depth D2 of groove 177 extends in the width direction of coil wire 164 which forms resonant coil 24, and the width W6 of groove 177 extends in the thickness direction of coil wire 164. Further as illustrated in Fig. 24, groove 177 extends in the extending direction of resonant coils 24.

It is apparent from Fig. 25 that depth D2 of groove 177 is formed greater than width W6 thereof. In the present embodiment, in groove 177, a position closest to the winding center of resonant coil 24 is set as an opening of groove 177. Accordingly, bottom surface 185 is a portion on the inner circumferential surface of groove 177 which faces the aforementioned opening. The depth of groove 177 is a span from the opening to bottom surface 185, the length of groove 177 is a span in the extending direction of resonant coil 24, and the width of groove 177 is a span in the thickness direction of the coil wire being inserted therein.

Coil holding member 162 is formed from an insulating resin material. During the transfer of power, a high-voltage current flows through resonant coil 24, and accordingly, resonant coil 24 will be subjected to a high temperature. As resonant coil 24 is subjected to a high temperature, support portions 178A and 178B will expand.

Thus, width W6 of groove 177 becomes smaller, and accordingly, the surface pressure applied by support portions 178A and 178B to resonant coil 24 being inserted in groove 177 increases.

When main body portion 179 is heated, main body portion 179 deforms by decreasing depth D2 of groove 177. Meanwhile, since width W6 of groove 177 is smaller than depth D2 of groove 177, when coil holding member 162 is heated, the amount of deformation by which width W6 of groove 177 becomes narrower is relatively greater than the amount of deformation by which depth D2 thereof becomes smaller.

As a result, coil holding member 162 is thermally expanded by the heat from resonant coil 24 or the like, and consequently, the holding force for coil holding member 162 to hold resonant coil 24 is increased, preventing resonant coil 24 from disengaging.

Although it is described by using Fig. 25 and the like that the holding force for holding resonant coil 24 is increased, similarly in the case when coil holding member 162 is heated by the heat from electromagnetic induction coil 23, the holding force for holding member 162 to hold electromagnetic induction coil 23 is also improved.

The width W5 of resonant coil 24 is designed to be greater than depth D2 of groove 177, and thereby resonant coil 24 protrudes out of groove 177. Accordingly, as illustrated in Fig. 18, resonant coil 24 is satisfactorily cooled by the cooling air introduced into tube 148 by blower 150.

In Fig. 24, when viewed from a position away from support portions 178 in the aligning direction of support portions 178, each support portion 178 is formed into a trapezoidal shape. Specifically, support portion 178 includes a long side portion 180 connected to main body portion 179, side portions 183 and 184, and a short side portion 182.

Support portion 178A is formed in such a way that the length L11 in the extending direction of resonant coil 24 increases as heading toward bottom surface 185 of groove 177. In other words, since side portions 183 and 184 of support portion 178A are formed into a tapered shape, the exposed area of resonant coil 24 is increased. Thereby, an area of resonant coil 24 to be cooled by the cooling air increases, which makes it possible to cool resonant coil 24 satisfactorily. It is also acceptable to curve side portions 183 and 184.

Moreover, since support portion 1178B facing support portion 178A is also formed in a way similar to support portion 178A, it is possible to facilitate the insertion of resonant coil 24 into groove 177, and thereby improve the assembly efficiency.

It should be understood that the embodiments disclosed herein have been presented for the purpose of illustration and description but not limited in all aspects. It is intended that the scope of the present invention is not limited to the description above but defined by the scope of the claims and encompasses all modifications equivalent in meaning and scope to the claims. Moreover, the numerical numbers and the like mentioned above are for the purpose of illustration without limitation.

INDUSTRIAL APPLICABILITY

The present invention is applicable to a power reception device, a power transmission device and a power transfer system.

REFERENCE SIGNS LIST

10: electrically powered vehicle; 24, 94, 99: resonant coil; 12, 23, 92, 97: electromagnetic induction coil; 13: rectifier; 14: converter; 15: battery; 16: power control unit; 17: motor unit; 19, 23, 25, 95, 98: capacitor; 20: external power supply device; 21: AC power supply; 22: high-frequency power driver; 26: control unit; 27, 96: power reception unit; 28, 93: power transmission unit; 40, 91: power reception device; 41, 90: power transmission device; 42: parking space; 43, 143: housing; 44, 144: cover; 45, 145: shield; 46, 146: unit; 47, 147: cooling device; 48, 148: tube; 49, 149: exhaust port; 50, 150: blower; 51, 151: partition member; 55, 56, 155, 156: bolt; 57, 58, 158: hole; 61, 161: holding unit; 62, 162: coil holding member; 63, 64, 163, 164: coil wire; 65, 66, 70, 71, 165, 166, 170, 171: main surface; 67, 68, 72, 73, 167, 168, 172, 173: side surface; 75, 175: base; 76, 176: pillar; 77, 177: groove; 78, 78A, 78B, 178A, 178B: support portion; 79, 179: main body portion; 80, 180: long side portion; 82, 182: short side portion; 83, 84, 183, 184: side portion; 85, 185: bottom surface; 86, 87: inner side surface; 89: power transfer system; CC1, C2: capacitance; D1, D2: depth; ECU: vehicle; L1, L2, L3: efficiency curve; L10, L11: length; Lr, Lt: inductance; O1, O2: center line; T1, T2, T4, T5: thickness; W1, W2, W3, W4, W5, W6: width; f0, f1, f2: natural frequency; f3, f4, f5, f4, f5, f6: frequency; k1, k2, k3: curve

**Claims**

1. A power reception device, comprising:

   a power reception unit (27) configured to receive power in a non-contact manner from a power transmission unit (28) spaced with a distance therefrom; and
   a first holding unit (61) configured to hold said power reception unit (27),
   said power reception unit (27) including a power reception coil (11), and
   said power reception coil (11) being formed by winding a first coil wire (64) which has a width greater than a thickness thereof,

said first holding unit (61) including a plurality of first coil holding members (62) each formed with a first groove (77) which extends in an extending direction of said power reception coil (11) and receives said power reception coil (11), and

at least a part of said first groove (77) being formed in such a way that a depth of said first groove (77) extending in a width direction of said first coil wire (64) is greater than a width of said first groove (77) extending in a thickness direction of said first coil wire (64).

2. The power reception device according to claim 1, wherein the width of said first coil wire (64) is greater than the depth of said first groove (77).

3. The power reception device according to claim 1, wherein
said first coil holding member (62) includes:

a first support portion (78A) disposed adjacent to said first groove (77) in the width direction of said first groove (77) for supporting said power reception coil (11); and
a second support portion (78B) disposed opposite to said first support portion (78A) relative to said first groove (77) for supporting said power reception coil (11), and
at least one of said first support portion (78A) and said second support portion (78B) is formed in such a way that a length thereof in the extending direction of said power reception coil (11) increases as heading toward a bottom of said first groove (77).

4. The power reception device according to claim 1, wherein
said first coil holding member (62) is formed into a pillar shape, and
said first groove (77) is formed in multiple numbers spaced with a distance in a height direction of said first coil holding member (62).

5. The power reception device according to claim 1, wherein said first coil holding member (62) is disposed inside said power reception coil (11) and spaced with a distance along said power reception coil (11).

6. The power reception device according to claim 5, further comprising a capacitor connected to both ends of said power reception coil (11), wherein
both ends of said power reception coil (11) are drawn to the inner side of said power reception coil (11).

7. The power reception device according to claim 1, further comprising a first housing case (43) for housing therein said power reception unit (27) and said first holding unit (61), wherein
said first housing case (43) includes a top plate, a bottom surface facing said top plate, and a peripheral wall connecting said top plate and said bottom surface, and
said first coil holding member (62) is connected to said top plate and said bottom surface.

8. The power reception device according to claim 1, wherein the difference between the natural frequency of said power transmission unit (28) and the natural frequency of said power reception unit (27) is not more than 10% of the natural frequency of said power reception unit (27).

9. The power reception device according to claim 1, wherein the coupling coefficient between said power reception unit (27) and said power transmission unit (28) is 0.1 or less.

10. The power reception device according to claim 1, wherein said power reception unit (27) receives power from said power transmission unit (28) via at least one of a magnetic field which is formed between said power reception unit (27) and said power transmission unit (28) and oscillates at a specific frequency and an electric field which is formed between said power reception unit (27) and said power transmission unit (28) and oscillates at a specific frequency.

11. A power transmission device, comprising:

a power transmission unit (28) configured to transmit power in a non-contact manner to a power reception unit (27) spaced with a distance therefrom; and
a second holding unit (161) configured to hold said power transmission unit (28),
said power transmission unit (28) including a power transmission coil (24), and
said power transmission coil (24) being formed by winding a second coil wire (164) which has a width greater than a thickness thereof,
said second holding unit (161) including a plurality of second coil holding members (162) each formed with a second groove (177) which extends in an extending direction of said power transmission coil (24) and receives said power transmission coil (24), and
at least a part of said second groove (177) being formed in such a way that a depth of said second groove (177) extending in a width direction of said second coil wire (164) is greater than a width of said second groove (177) extending in a thickness direction of said second coil wire (164).

12. The power transmission device according to claim 11, wherein the width of said second coil wire (164) is greater than the depth of said second groove (177).

13. The power transmission device according to claim 11, wherein
said second coil holding member (162) includes:

a third support portion (178A) disposed adjacent to said second groove (177) in the width direction of said second groove (177) for supporting said power transmission coil (24); and
a fourth support portion (178B) disposed opposite to said third support portion (178A) relative to said second groove (177) for supporting said power transmission coil (24), and
at least one of said third support portion (178A) and said fourth support portion (178B) is formed in such a way that a length thereof in the extending direction of said power transmission coil (24) increases as heading toward a bottom of said second groove (177).

14. The power transmission device according to claim 11, wherein
said second coil holding member (162) is formed into a pillar shape, and
said second groove (177) is formed in multiple numbers spaced with a distance in a height direction of said second coil holding member (162).

15. The power transmission device according to claim 11, wherein said second coil holding member (162) is disposed inside said power transmission coil (24).

16. The power transmission device according to claim 15, further comprising a capacitor connected to both ends of said power transmission coil (24), wherein
both ends of said power transmission coil (24) are drawn to the inner side of said power transmission coil (24).

17. The power transmission device according to claim 11, further comprising a second housing case (143) for housing therein said power transmission unit (28) and said second holding unit (161), wherein
said second housing case (143) includes a top plate, a bottom surface facing said top plate, and a peripheral wall connecting said top plate and said bottom surface, and
said second coil holding member (162) is connected to said top plate and said bottom surface.

18. The power transmission device according to claim 11, wherein the difference between the natural frequency of said power transmission unit (28) and the natural frequency of said power reception unit (27) is not more than 10% of the natural frequency of said power reception unit (27).

19. The power transmission device according to claim 11, wherein the coupling coefficient between said power reception unit (27) and said power transmission unit (28) is 0.1 or less.

20. The power transmission device according to claim 11, wherein said power transmission unit (28) transmits power to said power reception unit (27) via at least one of a magnetic field which is formed between said power reception unit (27) and said power transmission unit (28) and oscillates at a specific frequency and an electric field which is formed between said power reception unit (27) and said power transmission unit (28) and oscillates at a specific frequency.

21. A power transfer system, comprising:

a power transmission device including a power transmission unit (28); and
a power reception device configured to receive power in a non-contact manner from said power transmission device,

said power reception device including:

a power reception unit (27) configured to receive power in a non-contact manner from said power transmission unit (28); and
a first holding unit (61) configured to hold said power reception unit (27),

said power transmission device including a second holding unit (161) configured to hold said power transmission unit (28),
said power reception unit (27) including a power reception coil (11),
said power reception coil (11) being formed by winding a first coil wire (64) which has a width greater than a thickness thereof,
said first holding unit (61) including a plurality of first coil holding members (62) each formed with a first groove (77) which extends in an extending direction of said power reception coil (11) and receives said power reception coil (11), and
at least a part of said first groove (77) being formed in such a way that a depth of said first groove extending in a width direction of said first coil wire (64) is greater than a width of said first groove extending in a thickness direction of said first coil wire (64),
said power transmission unit (28) including a power transmission coil (24),
said power transmission coil (24) being formed by winding a second coil wire (164) which has a width greater than a thickness thereof,
said second holding unit (161) including a plurality of second coil holding members (162) each formed with a second groove which extends in an extending direction of said power transmission coil (24) and receives said power transmission coil (24), and
at least a part of said second groove being formed in such a way that a depth of said second groove extending in a width direction of said second coil wire (164) is greater than a width of said second groove extending in a thickness direction of said second coil wire (164).

22. The power transfer system according to claim 21, wherein the difference between the natural frequency of said power transmission unit (28) and the natural frequency of said power reception unit (27) is not more than 10% of the natural frequency of said power reception unit (27).

23. The power transfer system according to claim 21, wherein the coupling coefficient between said power reception unit (27) and said power transmission unit (28) is 0.1 or less.

24. The power transfer system according to claim 21, wherein said power reception unit (27) receives power from said power transmission unit (28) via at least one of a magnetic field which is formed between said power reception unit (27) and said power transmission unit (28) and oscillates at a specific frequency and an electric field which is formed between said power reception unit (27) and said power transmission unit (28) and oscillates at a specific frequency.

FIG.1

FIG.2

FIG.3

TRANSFER EFFICIENCY AT SPECIFIC FREQUENCY (%)

NATURAL FREQUENCY DEVIATION (%)

FIG.4

TRANSFER EFFICIENCY (%)

## FIG.5

INTENSITY OF
ELECTROMAGNETIC
FIELD

k1

k2

k3

0

0

DISTANCE FROM CURRENT SOURCE
(MAGNETIC CURRENT SOURCE)

## FIG.6

40

55

45

43

44

VIII

VIII

FIG.7

FIG.8

FIG.9

FIG.10

FIG.11

FIG.12

FIG.13

FIG.14

FIG.15

FIG.16

# FIG.17

FIG.18

FIG.19

FIG.20

FIG.21

FIG.22

FIG.23

**FIG.24**

**FIG.25**

<div align="center">**INTERNATIONAL SEARCH REPORT**</div>

| International application No. |
| --- |
| PCT/JP2011/072839 |

**A. CLASSIFICATION OF SUBJECT MATTER**
*H01F38/14*(2006.01)i, *H02J7/00*(2006.01)i

According to International Patent Classification (IPC) or to both national classification and IPC

**B. FIELDS SEARCHED**

Minimum documentation searched (classification system followed by classification symbols)
H01F38/14, H01F27/30, H02J7/00

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2010-267917 A (Toyota Motor Corp.), 25 November 2010 (25.11.2010), entire text; all drawings (Family: none) | 1-24 |
| Y | JP 2006-147927 A (Ushio Inc.), 08 June 2006 (08.06.2006), paragraphs [0012] to [0014]; fig. 1 to 3 (Family: none) | 1-24 |
| Y | JP 51-37951 Y2 (Sansha Electric Manufacturing Co., Ltd.), 17 September 1976 (17.09.1976), entire text; all drawings (Family: none) | 1-24 |

☒ Further documents are listed in the continuation of Box C.     ☐ See patent family annex.

| | |
| --- | --- |
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| 28 December, 2011 (28.12.11) | 17 January, 2012 (17.01.12) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/072839

| C (Continuation). | DOCUMENTS CONSIDERED TO BE RELEVANT | |
|---|---|---|
| Category* | Citation of document, with indication, where appropriate, of the relevant passages | Relevant to claim No. |
| Y | JP 2010-268660 A (Toyota Motor Corp.), 25 November 2010 (25.11.2010), paragraphs [0051] to [0073]; fig. 5 to 9 (Family: none) | 7,17 |
| Y | JP 11-329862 A (TDK Corp.), 30 November 1999 (30.11.1999), paragraph [0018]; fig. 1 (Family: none) | 7,17 |
| A | JP 2010-87353 A (Toyota Motor Corp.), 15 April 2010 (15.04.2010), paragraphs [0047] to [0071]; fig. 4 to 8 & WO 2010/038326 A1 | 1-24 |
| E,A | JP 2011-204836 A (Toyota Motor Corp.), 13 October 2011 (13.10.2011), paragraphs [0043] to [0068]; fig. 5 to 10 (Family: none) | 1-24 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010087353 A